# EUROPEAN PATENT APPLICATION

(11) **EP 3 611 595 A1**
(43) Date of publication of application: **19.02.2020**
(21) Application number: 18189354.6
(22) Date of filing: 16.08.2018
(51) Int. Cl.: G06F 1/3206, B60R 1/00, H04N 5/232

(54) **A VISION SYSTEM FOR A MOTOR VEHICLE AND A METHOD OF TRAINING**

(71) Applicant: Veoneer Sweden AB, 447 83 Vårgårda (SE)
(72) Inventor: Jagbrant, Gustav, 58646 Linköping (SE); Cronvall, Per, 58332 Linköping (SE)
(74) Representative: Müller Verweyen

(57) **Abstract**

A vision system (1) for a motor vehicle, comprises a sensing device (40) adapted to sense data (99), a data processing device (7) adapted to process said sensed data (99), wherein said data processing device (7) comprises a controller (30) adapted to switch a power mode of the data processing device (7) between a low-power mode and a high-power mode, wherein a high-power application (110) can be executed in the high-power mode. The data processing device (7), in a low-power mode, is adapted to execute a power mode classifier (20), and the power mode classifier (20) is adapted to classify any input data (99) from said sensing device (40) as requiring executing said high-power application (110) or not, and to output a high-power mode request (130) to the controller (30) to switch the power mode of the data processing device (7) from the low-power mode to the high-power mode in case the power mode classifier (20) has classified the input data (99) as requiring executing said high-power application (110).

## Description

The invention relates to a vision system for a motor vehicle, comprising a sensing device adapted to sense data, a data processing device adapted to process said sensed data, wherein said data processing device comprises a controller adapted to switch a power mode of the data processing device between a low-power mode and a high-power mode, wherein a high-power application can be executed in the high-power mode. The invention relates also to a method of training a software component for a vision system.

For example, in windshield mounted automotive applications, thermal management is a crucial problem due to the difficulty of the dissipation of heat generated by the electronics of the vision system, in particular by the data processing device. While the vehicle is moving, this problem is alleviated by the air flowing on the windshield and thereby cooling the vision system. However, when the vehicle is stationary, the problem becomes severe and often requires specific low-power modes of the data processing device in order to reduce the amount of heat generated by the vision system.

In autonomous or semi-autonomous vehicles, the problem is particularly complex due to the heat generation of the data processing device by the execution of computationally expensive algorithms such as object detection. When the vehicle is moving, a high-power mode is engaged and computationally expensive algorithms that analyze the traffic situation can be utilized to determine when the vehicle should stop and the data processing device should enter the low-power mode.

To return to high-power mode, it is necessary to be able to detect when the vehicle potentially should start moving again while at the same time keeping the computational complexity and heat generation down.

In the prior art, one or more computationally cheap detectors may be employed in low-power mode to detect movements in the scene or specific objects in recorded images. The detected movements or changes to these objects may then be used to determine that the data processing device should switch to high-power mode. However, to provide detectors and controllers which are cost-effective, computationally effective and robust enough for all different situations that are of interest remains a problem.

It is the problem of the invention to provide an improved vision system that is able to effectively and robustly determine when to switch from low-power mode to high-power mode.

The invention solves the problem with the subject matter of the independent claims.

According to the invention, the data processing device, in the low-power mode, is adapted to execute a power mode classifier, and the power mode classifier is adapted to classify any input data from the sensing device as requiring executing said high-power application or not, and to output a high-power mode request to the controller to switch the power mode of the data processing device from the low-power mode to the high-power mode in case the power mode classifier has classified the input data as requiring executing said high-power application.

The invention has realized that the types of situations which are necessary to handle in the low-power mode are limited compared to possible situations in high-power mode and that these situations typically do not require executing the high-power application. Typical scenarios in low-power mode, in particular when the vehicle is stationary, include traffic queues, railway crossing barriers, and traffic light-controlled intersections etc. The suggested vision system exploits that many of the functions which exist in autonomous or semi-autonomous vehicles are redundant when the vehicle is in a state where the execution of high-power applications is not necessary, for example, when the vehicle is stationary. Therefore, the power mode classifier can be a classifier specialized to detect only when to move from low-power mode to high-power mode.

In the low-power mode almost exclusively energy efficient parts of the hardware of the data processing device can be utilized. The power mode classifier is executed in low-power mode to prevent the data processing device from generating heat when executing the power mode classifier. In contrast to prior art, the power mode classifier is and/or operates completely data driven. Thus, it is not necessary to manually design rules for different types of scenes and/or scenarios.

When deployed in a motor vehicle, the power mode classifier receives sensed data from the sensing device as input. The output of the power mode classifier is used to determine if the data processing device should switch the power mode from low-power mode to high-power mode.

Based on the high-power mode request, the controller can transmit a high-power application control signal to the high-power application to switch the high-power application on. The high-power application can comprise any application, in particular any application that is necessary and/or desired for driving the motor vehicle, such as object detection, object classification, object tracking, driver and/or passenger information, driver assistance, and/or an action for autonomous or semi-autonomous driving. The power mode classifier is separate from the high-power application and effectively specialized to classify the input data only and to potentially output the high-power mode request.

Preferably, the data processing device, in the low-power mode, is adapted to execute a low-power application to provide basic functionality by the execution of the low-power application. Advantageously, therein the low-power application is separate from the power mode classifier to provide additional low-power mode specific applications without impeding the function and the effectivity of the power mode classifier. The low-power application can optionally output a low-power application output to ensure compatibility with an output interfaces, such as software interfaces, displays, interfaces of a driving assistance device and/or interfaces of a safety system of the vehicle, e.g., a control signal. Based on the high-power request, the controller can transmit a low-power application control signal to a low-power application and/or to the power mode classifier to switch the low-power application and/or the power mode classifier off.

In a preferred embodiment, the data processing device, in the low-power mode, is adapted to deactivate the high-power application which requires high-power processing in order to reduce the computational complexity and/or occupancy of resources of the data processing device in the low-power mode and thereby reduce the heat generation by the data processing device in the low-power mode. This applies when the power mode classifier has classified the input data as not requiring executing the high-power application. The controller is preferably adapted to transmit a high-power application control signal to switch the high-power application off.

If the controller transmits the high-power application control signal to switch the high-power application off, the high-power mode can be deactivated and the power mode of the data processing device can switch to low-power mode. Preferably, the high-power application remains deactivated until the high-power mode request is output by the power mode classifier and a high-power application control signal is output by the controller.

In an advantageous embodiment, the power mode classifier is adapted to output a power low request to the controller to switch the power mode of the data processing device from the high-power mode to the low-power mode on the basis of the input data in case the power mode classifier has classified the input data as not requiring executing a high-power application to reduce the heat generation if the high-power application is not necessary. In the high-power mode the data processing device can execute any application with full functionality allowing for a reliable power low request.

Based on the power low request, the controller can transmit a high-power application control signal to the high-power application to switch the high-power application off and/or a low-power application control signal to the low-power application to switch the low-power application on. The low-power application can be executed on energy efficient parts of the data processing device in low-power mode and reduces heat generation compared to the high-power mode.

Advantageously, the power mode classifier is adapted to output a high-power mode request after a designated amount of time in order to execute for example high-power applications to verify that the low-power mode is still suitable. In this embodiment, if the vision system stays in low-power mode for more than the designated amount of time, it is possible to disregard, or overrule, the power mode classifier and its output and/or in particular to forcibly activate the high-power mode. For example, after the duration of a typical stationary phase at a traffic light controlled intersection, the high-power application can be switched on to verify and/or correct the output of the power mode classifier.

In a preferred embodiment the sensing device comprises at least any one of an imaging apparatus, a lidar device, a radar device and/or a combination thereof to provide the power mode classifier with any possibly relevant information to determine a switching condition.

Preferably, the high-power mode is additionally externally activatable by a control signal from an external electronic control unit. This allows controlling the power mode classifier by incorporating further input data and/or activating the high-power mode by an external signal. In this embodiment, the control signal can preferably be transmitted from the external electronic control unit to the controller. The external electronic control unit is preferably separate from the data processing device.

For example, the electronic control unit can transmit to the power mode classifier information about the vehicle, such as velocity, acceleration, time, and/or a driver's action, which can be relevant for switching from low-power mode to high-power mode. In this embodiment, the high-power mode may be externally activated by control signal from the external electronic control unit, in particular a central electronic control unit. The control signal of the external electronic control unit can be prioritized over the output of the power mode classifier and/or the input data from the sensing device. The control signal of the external electronic control unit can in particular forcibly switch the power mode of the data processing device to high-power mode.

Advantageously, the power mode classifier comprises at least any one of: a deep neural network, a convolutional neural network, a boosting classifier, and/or a support vector machine to provide particularly efficient, robust, and in particular trainable, power mode classifier. In other embodiments, any other classification model can be used.

In a preferred embodiment, the data processing device comprises with an energy efficient accelerator, in particular a convolutional neural network accelerator, to execute the power mode classifier. This reduces heat generation and provides a robust performance. In this embodiment, the accelerator can comprise particularly energy efficient and/or dedicated hardware. The energy efficient accelerator can comprise a convolutional neural network accelerator. It is possible to almost exclusively utilize the energy efficient parts of the data processing device and/or the dedicated hardware device for executing the power mode classifier.

It is preferred that the classifier is adapted to output a high-power mode request on the basis of at least two images recorded by said sensing device to improve the reliability of the power mode classification and/or the high-power mode request. Preferably, at least one of the images was recorded, when and/or before the vision system switched to low-power mode to allow a proper comparison of the situation and/or scene before and after switching to low-power mode.

According to the invention, a method of training a power mode classifier for a vision system comprises generating ground truth data for training the power mode classifier to provide the training of the power mode classifier with proper training data, wherein ground truth data comprise pieces of input sensor data corresponding to a motor vehicle and labels indicating for each piece of input sensor data whether it requires switching to high power mode or not. To train the power mode classifier, the recorded pieces of input sensor data from a training sensing device is assigned labels, in particular true or false labels, indicating if the classifier should signal that executing a high-power application is required or not and/or that high-power mode should be activated or not. The training sensing device preferably corresponds to a sensing device of the motor vehicle in which the power mode classifier is to be deployed. For example, the training sensing device and the sensing device of the motor vehicle both comprise an imaging apparatus, a lidar device, a radar device or a combination thereof.

Generating ground truth data by labelling said pieces of input sensor data using an algorithm without compute and heat constraints which can determine whether the motor vehicle underlying the input sensor data needs to be started and/or stopped is preferred to improve the ability of the power mode to determine a switching condition with an automated method preferably based on a given set of rules on how to determine labels. Generating ground truth data with an algorithm without compute and heat constraints, in particular a high-power algorithm, is reliable and based of the full functionality and performance of the vision system. A high-power application and/or algorithm can, for example, reliably determine when the motor vehicle needs to be stopped and/or started and accordingly when the power mode is to be switched between low-power mode and high-power mode. This can be used to generate ground truth data, defining when to switch between low-power mode and high-power mode, to increase the reliability of the power mode classifier for determining power mode switching conditions.

Preferably, based on the movement of the motor vehicle in the input sensor data, instances where the motor vehicle is stationary for a certain amount of time is selected and used as examples of when to switch between power modes. Based on the movement of the ego motor vehicle in the sensed data, in particular based on vehicle speed sensor data and/or image processing and/or on optical flow estimates, instances where the motor vehicle is stationary for a certain amount of time may be selected. For example, at a traffic light controlled intersection the vehicle stops and the data processing device can be switched to low-power mode. The movement of the motor vehicle can be sensed by image processing and/or any suitable sensing device.

In a preferred embodiment, the controller is adapted to transmit a low-power application control signal to switch the low-power application and/or the power mode classifier on or off to save processing resources and simplify computation and data management when the low-power application and/or the power mode classifier is not needed.

Assuming that the low power mode should be activated for a fixed set of scenes and scenarios, manually labelling when to switch between power modes is preferred. I.e. ground truth data can comprise manually labelled data, such as manually labelled images, representing scenes and scenarios in which the vision system should be executed in, or switched between, low-power mode and/or high-power mode.

In the following the invention shall be illustrated on the basis of preferred embodiments with reference to the accompanying drawings, wherein:
- Fig. 1: shows a schematic diagram of a vision system according to the present invention; and
- Fig. 2: shows a flow diagram of a vision method according to an embodiment of the present invention.

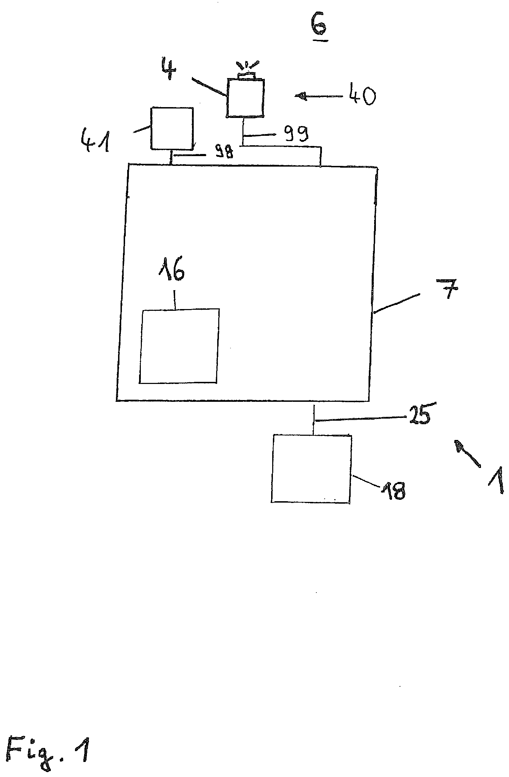

In Figure 1, a vision system 1 mounted in a motor vehicle comprises a sensing device 40 for sensing data of the motor vehicle and/or a region surrounding 6 the motor vehicle. The sensing device 40 can be coupled to an on-board data processing device 7 adapted to process the sensed data received as input data 99 from the sensing device 40.

In this embodiment, the sensing device 40 comprises an imaging apparatus for capturing images of the region surrounding 6 the motor vehicle, for example a region in front of the motor vehicle. The imaging apparatus comprises one or more optical imaging devices 4, in particular cameras, preferably operating in the visible and/or infrared wavelength range, where infrared covers near IR with wavelengths below 5 microns and/or far IR with wave-lengths beyond 5 microns.

In some embodiments the imaging apparatus comprises a plurality of imaging devices 4 in particular forming a stereo imaging apparatus. In other embodiments only one imaging device 4 forming a mono imaging apparatus can be used.

In still other embodiments or additionally, the sensing device 40 and/or imaging apparatus comprises a lidar system to obtain depth data of the surrounding 6. The sensing device 40 can comprise a radar system to obtain information on the distance between the motor vehicle and objects in the surrounding 6 of the motor vehicle. In these embodiments, the data processing device 7 can be in communication with emitting devices for the emission of electromagnetic radiation, in particular of light and/or laser beams.

As shown in Figure 1, the data processing device 7 is electrically connected with an electronic control unit 41. The electronic control unit 41 can be a central electronic control unit 41 of the motor vehicle and/or can provide the data processing device 7 with any input data. In particular, the input data from the electronic control unit 41 can comprise vehicle information, such as speed and/or position, time, and/or signals based on passenger and/or driver action. Preferably, the input data from the electronic control unit 41 comprises a control signal 98 to control the power mode of the data processing device 7.

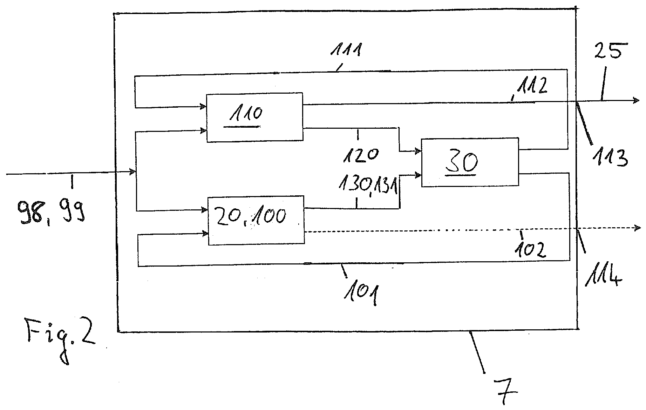

The sensing device 40 and/or the electronic control unit 41 provides input data 99 and/or the control signal 98 to the data processing device 7 for further data processing as explained with reference to Figure 2.

As shown in Figure 1, the data processing device 7 preferably has access to, or comprises, a data memory 16 to store for example sensed data and/or images. The data processing device 7 and the memory device 16 are preferably realised in a second on-board electronic control unit (ECU) possible separate from the electronic control unit 41 and may be connected to the sensing device 40 and/or the imaging device 4 via a separate cable or a vehicle data bus. In another embodiment the second ECU and one or more of the imaging devices 4 can be integrated into a single unit, where a one box solution including the second ECU, the electronic control unit 41 and/or all imaging devices 4 can be preferred.

The data processing device 7 is preferably a digital device which is programmed or programmable and preferably comprises a microprocessor, a microcontroller, a digital signal processor (DSP), and/or a microprocessor part in a System-On-Chip (SoC) device. The data processing device 7, or part of its functions, can be realized by a System-On-Chip (SoC) device comprising, for example, FPGA, DSP, ARM and/or microprocessor functionality.

The data processing device 7 preferably can comprise an energy efficient accelerator, like a Field Programmable Gate Array (FPGA) or an Application Specific Integrated Circuit (ASIC), or an FPGA and/or ASIC part in a System-On-Chip (SoC) device, for executing a power mode classifier 20. In particular, the power mode classifier 20 can be or comprise a deep neural network, a convolutional neural network, a boosting classifier, and/or a support vector machine executed in the energy efficient accelerator.

The data processing device 7 may comprise dedicated hardware, for performing certain functions, for example for controlling the capture of images by the imaging apparatus 40, receiving the electrical signal 99 containing the image information from the imaging apparatus 40, rectifying or warping pairs of left/right images into alignment and/or creating disparity or depth images.

The data processing device 7 is advantageously adapted to activate adjust and/or control at least one safety device 19 through a control signal 25 in order to cause a corresponding action. The safety device 19 may comprise at least one active safety device and/or at least one passive safety device. In particular, the safety device 19 may comprise one or more of: at least one safety belt tensioner, at least one passenger airbag, one or more restraint systems such as occupant airbags, a hood lifter, an electronic stability system, at least one dynamic vehicle control system, such as a brake control system and/or a steering control system, a speed control system; a display device to display information relating to a detected object; a warning device adapted to provide a warning to a driver by suitable optical, acoustical and/or haptic warning signals.

All steps from imaging, image processing to possible activation or control of safety device 19 are performed automatically and continuously during driving in real time. The invention is applicable to autonomous driving, where the vehicle is an autonomous vehicle adapted to drive partly or fully autonomously or automatically, and driving actions of the driver are partially and/or completely replaced or executed by the vehicle.

Figure 2 shows a flow diagram of a vision method for a vision system as for example described with reference to Figure 1. The data processing device 7 can operate in a low-power mode or in a high-power mode as will be explained with reference to Figure 2.

Image and data processing carried out by the processing device 7 advantageously comprises the execution of a power mode classifier 20, a low-power application 100 and a high-power application 110.

Input data 99 can be transmitted to the high-power application 110, the low-power application 100 and/or the power mode classifier 20, preferably depending on the activated power mode.

The input data 99 can in particular comprise input of sensor data sensed by a sensing device 40 and/or control signals by an electronic control unit 41. The input data 99 can be obtained from, for example, a camera, a radar system, a lidar system, or any combination thereof. The input data 99 can comprise at least two images, i.e., multiple images, such as the current image and a previously captured image that is stored in a memory 16.

The high-power application 110 receives the input data 99, in particular if the high-power mode of the data processing device 7 is activated.

The high-power application 110 can comprise identifying and preferably also classifying possible objects and/or object candidates for example in front of the motor vehicle, such as pedestrians, other vehicles, bicyclists and/or large animals, tracking over time the position of objects and/or object candidates identified in the captured images, and activating or controlling the at least one safety device 19 depending on an estimation performed with respect to a identified, classified and/or tracked object and/or object candidate, for example on an estimated collision probability. The high-power application 110 can comprise any applications that are relevant for the motor vehicle and/or employ full functionality of the vision system 1. The full functionality can constitute a driver assistance system and/or an autonomous driving system.

The high-power application 110 transmits high-power application output 112 to an output interface 113, thus forming the control signal 25 as explained with reference to Figure 1. The high-power application output 113 can comprise any application specific signal. Based on the high-power application output 112, the vision system 1 and/or the motor vehicle can display information to a passenger, activate safety functions, execute driving actions, etc.

The high-power application 110 leads to the occupancy of high-power resources of the data processing device 7 which demand high power and generate heat which heats the vision system 1 and the data processing device 7. In order to reduce the heat that is produced by the data processing device 7 the high-power application 110 can transmit a low-power mode request 120 to a controller 30 which is adapted to switch the power mode of the data processing device 7 between the low-power mode and the high-power mode. The high-power application 110 signals the controller 30 if the power mode of the data processing device 7 should be switched to low-power mode. The high-power application 110 can determine when no high-power application 110 is needed. For example, when the vehicle is stationary.

The low-power application 100 can comprise passenger information, passenger entertainment and/or simple safety device functionality which lead to less heat generation than the high-power application 110.

The low-power application 100 receives the input data 99, in particular if the low-power mode of the data processing device 7 is activated. The low-power application 100 leads to less generation of heat by the data processing device 7 than the high-power application 110 as the low-power application 100 is preferably executed in low-power mode.

The low-power application 100 can transmit low-power application output 102 to a low-power output interface 114. The low-power application output 102 of the low-power application 100 is optional as indicated by the dotted line in Figure 2. The low-power application output 102 and/or the low-power output interface 114 may be implemented compatible with the output interface 113 of the high-power application 110 and/or the control signal 25 to ensure output interface compatibility.

The classifier 20 uses the input data 99 of the sensed data, preferably comprising images recorded by the sensing device 40 and/or the imaging device 4. In particular, the classifier 20 can utilize multiple images, such as a current image and a previous image. The previous image can be the most previous image of a sequence of images or an image that was obtained when the vision system switched to low-power mode.

The data processing device 7 is adapted to execute the power mode classifier 20, and the power mode classifier 20 is adapted to classify any input data 99 from said sensing device 40 as requiring executing a high-power application 110 or not, and to output a high-power mode request 130 to the controller 30 to switch the power mode of the data processing device 7 from the low-power mode to the high-power mode in case the power mode classifier 20 has classified the input data 99 as requiring executing a high-power application 110.

To activate the high-power mode, the power mode classifier 20 can transmit a high-power mode request 130 to the controller 30. In this case, the low-power power mode classifier 20 signals the controller 30 if the power mode should be switched to high-power mode.

To deactivate the high-power mode, the power mode classifier 20 can transmit a power low request 131 to the controller 30. In this case, the power mode classifier 20 signals the controller 30 if the power mode should be switched to low-power mode.

When the controller 30 receives a request 120, 130, 131, i.e., the low-power mode request 120, the power low request 131, or the high-power mode request 130, the controller 30 determines when to switch power modes and/or whether to switch an application 110 100 and/or the power mode classifier 20 on or off. The controller 30 signals the power mode classifier 20 and/or the applications 110, 100, i.e., the high-power application 110 and/or the low-power application 100, to switch on or off.

Specifically, the controller 30 can transmit a high-power application control signal 111 to switch the high-power application 110 on or off and a low-power application control signal 101 to switch the low-power application 100 and/or the power mode classifier 20 on or off.

Preferably, the high-power application control signal 111 and the low-power application control signal 101 are arranged so that only the high-power application 110 is switched on or off while the low-power application 100 and/or the power mode classifier 20 is complementary switched off or on. I.e., only either the low-power application 100 and/or the power mode classifier 20 is switched on or the high-power application 110 is switched on at the same time.

The power mode of the data processing device 7 can depend on the high-power application control signal 111 and/or the low-power application control signal 101. For example, if the high-power application control signal 111 switches the high-power application 110 off, the low-power mode is activated and/or the high-power mode is deactivated. If the high-power application control signal 111 switches the high-power application 110 on, the low-power mode is deactivated and/or the high-power mode is activated.

If, for example, the low-power application control signal 101 switches the low-power application 100 and/or the power mode classifier 20 on, the low-power mode can be activated and if the high-power application 110 is additionally switched off, the high-power mode be deactivated. If the low-power application control signal 101 switches the low-power application 100 and/or the power mode classifier 20 off, the low-power mode can be deactivated. Deactivating the low-power mode and/or switching the low-power application 100 and/or the power mode classifier 20 off is optional.

Preferably, the power mode of the data processing device 7 is switched together with the high-power application 110, the low-power application 100, and/or the power mode classifier 20. I.e., the power mode is switched to low-power mode if the high-power application 110 is switched off, and the low-power application 100 and/or the power mode classifier 20 are switched on. The power mode can be switched to high-power mode if the high-power application 110 is switched on, and/or the low-power application 100 and/or the power mode classifier 20 are switched off.

The data processing device 7 comprises the controller 30 adapted to switch the power mode of the data processing device 7 between the low-power mode and the high-power mode.

The controller 30 can receive an external control signals 98 from an electronic control unit 41 to request power mode switching by a control input external to the controller 30. The external control signal 98 by the electronic control unit 41 can be prioritized over the input data 99 from the sensing device 40 and/or the output of the power mode classifier 20. The control signal 98 of the electronic control unit 41 can in particular forcibly switch the power mode of the data processing device 7 to high-power mode by being transmitted to the controller 30 and triggering a high-power application control signal 111 to switch the high-power application 110 and/or the high-power mode on.

The classifier 20 is a trained classifier 20 which is preferably trained on a manufacturers site and/or by the manufacturer. To train the classifier 20, ground truth data is generated, wherein said ground truth data comprise pieces of input sensor data corresponding to a motor vehicle, and labels indicating for each piece of input sensor data whether it requires switching to high power mode or not. For each piece of input sensor data labels can be assigned which are either true or false labels indicating if the classifier 20 should signal that the high-power mode should be activated and/or that the input data 99 requires executing a high-power application 110, i.e., the high-power mode request 130 should be transmitted to the controller 30. Labels can automatically be assigned by a high-power algorithm without compute and heat constraints which can determine whether the motor vehicle underlying the input sensor data needs to be started and/or stopped and/or the high-power mode should be switched on or off.

## Claims

1. A vision system (1) for a motor vehicle, comprising:
- a sensing device (40) adapted to sense data (99),
- a data processing device (7) adapted to process said sensed data (99), wherein
- said data processing device (7) comprises a controller (30) adapted to switch a power mode of the data processing device (7) between a low-power mode and a high-power mode, wherein
- a high-power application (110) can be executed in the high-power mode,
**characterized in that**
- the data processing device (7), in the low-power mode, is adapted to execute a power mode classifier (20), and
- the power mode classifier (20) is adapted to classify any input data (99) from said sensing device (40) as requiring executing said high-power application (110) or not, and to output a high-power mode request (130) to the controller (30) to switch the power mode of the data processing device (7) from the low-power mode to the high-power mode in case the power mode classifier (20) has classified the input data (99) as requiring executing said high-power application (110).

2. The vision system (1) as claimed in claims 1, **characterized in that**
- the data processing device (7), in the low-power, is adapted to execute a low-power application (100), wherein preferably
- the low-power application (100) is separate from the power mode classifier (20).

3. The vision system (1) as claimed in any one of the preceding claims, **characterized in that**
- the data processing device (7), in the low-power mode, is adapted to deactivate the high-power application (110) which requires high-power processing.

4. The vision system (1) as claimed in any one of the preceding claims, **characterized in that**
- the power mode classifier (20) is adapted to output a power low request (131) to the controller (30) to switch the power mode of the data processing device (7) from the high-power mode to the low-power mode on the basis of the input data (99) in case the power mode classifier (20) has classified the input data (99) as not requiring executing a high-power application (110).

5. The vision system (1) as claimed in any one of the preceding claims, **characterized in that**
- the power mode classifier (20) is adapted to output a high-power mode request (130) after a designated amount of time.

6. The vision system (1) as claimed in any one of the preceding claims, **characterized in that**
- the sensing device (40) comprises at least any one of:
-- an imaging apparatus,
-- a lidar device,
-- a radar device.

7. The vision system (1) as claimed in any one of the preceding claims, **characterized in that**
- the high-power mode is additionally externally activatable by a control signal (98) from an external electronic control unit (41).

8. The vision system (1) as claimed in any one of the preceding claims, **characterized in that**
- the power mode classifier (20) comprises at least any one of:
-- a deep neural network,
-- a convolutional neural network,
-- a boosting classifier,
-- a support vector machine.

9. The vision system (1) as claimed in any one of the preceding claims, **characterized in that**
- the data processing device (7) comprises an energy efficient accelerator, in particular a convolutional neural network accelerator, to execute the power mode classifier (20) .

10. The vision system (1) as claimed in any one of the preceding claims, **characterized in that**
- the power mode classifier (20) is adapted to output a high-power mode request (130) on the basis of at least two images (5) recorded by said sensing device (40).

11. The vision system (1) as claimed in any one of the preceding claims, **characterized in that**
- the controller (30) is adapted to transmit a low-power application control signal (101) to switch the low-power application (100) and/or the power mode classifier (20) on or off.

12. A method of training a power mode classifier (20) for a vision system (1) according to any one of the preceding claims, **characterized by**
- generating ground truth data for training the power mode classifier (20), wherein said ground truth data comprise pieces of input sensor data corresponding to a motor vehicle and labels indicating for each piece of input sensor data whether it requires switching to high power mode or not.

13. The method as claimed in claim 12, **characterized by**
- labelling said pieces of input sensor data using an algorithm without compute and heat constraints which can determine whether the motor vehicle underlying the input sensor data needs to be started and/or stopped.

14. The method as claimed in claims 12 or 13, **characterized in that**
- based on the movement of the motor vehicle in the input sensor data, instances where the motor vehicle is stationary for a certain amount of time is selected and used as examples of when to switch between power modes.

15. The method as claimed in any one of the claims 12 to 14, **characterized by**
- assuming that the low power mode should be activated for a fixed set of scenes and scenarios, manually labelling when to switch between power modes.
